# EUROPEAN PATENT SPECIFICATION

(11) **EP 1 562 693 B1**
(45) Date of publication and mention of the grant of the patent: **18.06.2008**
(21) Application number: 03767943.8
(22) Date of filing: 14.11.2003
(51) Int. Cl.: B01D 61/10, F03B 13/26, F03B 17/02

(54) **DESALINATION DEVICE**
ENTSALZUNGSVORRICHTUNG
DISPOSITIF DE DESSALEMENT

(30) Priority: 14.11.2002 GB 0226526
(43) Date of publication of application: 17.08.2005
(73) Proprietor: Frepower Ltd, Glasgow G73 3DS (GB)
(72) Inventor: PRICE, Gordon, Glasgow G73 3DS (GB); REID, Alister, Ure, Rutherglen, Glasgow G73 3DS (GB)
(74) Representative: McKechnie, Neil Henry
(86) International application number: PCT/GB2003/004956
(87) International publication number: WO 2004/043576

(56) References cited:
- EP-A- 0 059 275
- EP-A- 1 197 658
- WO-A-03/087569
- GB-A- 1 130 107
- GB-A- 2 093 124
- GB-A- 2 138 509
- US-A- 4 698 969
- US-A- 5 186 822
- US-A- 5 411 377
- DATABASE WPI Section Ch, Week 199801 Derwent Publications Ltd., London, GB; Class D15, AN 1998-002228 XP002276778 -& ES 2 107 384 A (UNIV ALCALA DE HENARES) , 16 November 1997 (1997-11-16)

## Description

This invention relates to apparatus and a method for the desalination of a liquid. In particular it relates to the desalination of water so as to provide a means for supplying potable water from an impure source. Within the described apparatus and method the required pressure for the desalination process is provided by a water engine that is driven by its interaction with a body of water.

Desalination of sea water, so as to be suitable for human consumption, can be achieved through a reverse osmosis process as is well known to those skilled in the art. Such processes allow a water supply to be installed; for instance, in remote areas where there is insufficient water for human consumption or crop irrigation.

Reverse osmosis refers to the process of passing a liquid through a membrane in order to remove any salts suspended within the liquid and the removal of certain bacteria and viruses. Generally the process requires the sea water to be put under sufficient pressure such that it is capable of being forced through the membrane.

There are a number of methods and apparatus described in the Prior Art for the desalination of sea water e.g. European Patent Application Number 0,059,275. Typically, the osmotic pressure of sea water is around 28 bar (28 x 10⁵ Pa) for a 3.5% salt solution. Therefore, in order to operate a reverse osmosis desalination system a pressure of 70 bar (70 x 10⁵ Pa) is typically used and electrical pumps are generally employed to provide this pressure. Filter membranes tend to become clogged up during operation. To prevent this sea water is passed over the membrane so as to flush the clogging contaminants. Therefore, to keep the membrane from becoming clogged the recovery amount through the reverse osmosis filter for sea water at 35000 mg/l salt solution is typically limited to around 25%. Thus only 25% of the high pressure water is yielded as permeate while the other 75% is ejected as brine concentrate. A theoretical minimum energy requirement for the desalination of sea water is calculated to be around 0.75 kW/hr per cubic meter of water produced, regardless of the technique used.

The most widely used form of reverse osmosis filter is a spiral wound cartridge. Typical reverse osmosis systems employing such filters require a 4kW pump capacity per cubic meter of water produced. This figure includes the use of turbine pumps to recover energy from the 75% of the high pressure water that passes through the filter. A commercial system providing 400 tonnes of water per day therefore requires a 375kW pump motor that needs a significant electrical supply.

Therefore, to use existing reverse osmosis technology in remote areas, or areas with insufficient or expensive electrical supplies, can be difficult to achieve without significant upgrading of the electrical supply system. In the case of islands connected by cables to a mainland this may be impractical due to cost. The use of a local renewable energy resource would obviously help to alleviate this problem.

It is known to those skilled in the art that wind, solar and wave energy are all potential candidates for local renewable energy sources, however these techniques all depend on an intermittent source. A more preferable source is the use of tidal energy since this provides energy for regular periods every day throughout the year, and so ensures a constant supply of desalinated water.

UK Patent No. GB 1,130,107 teaches of apparatus for the desalination of sea water using reverse osmosis and tidal energy. The apparatus comprises a buoyant vessel attached to the seabed, wherein the vessel is allowed to rise with the incoming tide. As the vessel rises a piston located in a cylinder, anchored to the seabed, simultaneously compresses sea water and forces it through a reverse osmosis membrane. Unfortunately this technique only extracts energy on the rising phase of the tide. Furthermore no means of flushing the surface of the filter membrane is provided hence the system gradually degrades as the membrane becomes clogged. During the falling phase of the tide the associated hydrostatic pressure is employed to empty the desalinated water out of the area above the piston. However, no account is made for the normal osmosis effect that would result in the emptied water being returned to the salt solution located below the piston.

UK Patent No. GB 1,141,138 and European Patent Application No. EP 1,219,137 teach of sea water driven desalination apparatus that employ hydrostatic pressure in order to provide the required force to drive the sea water through a reverse osmosis membrane. Such apparatus require the reverse osmosis filter to be mounted in a vessel submerged at a sufficient depth. Therefore, these designs result in the construction of very expensive offshore installations in order to get the membranes to the required depths. A further disadvantage is that the fresh water produced must then be pumped back to the surface and thereafter transported to its point of use. In addition neither document teaches of a mechanism for flushing the surface of the filter membranes and so a steady degradation in the performance of the apparatus results.

PCT Application WO 99/28622 teaches of a wave-powered prime mover that comprises a pair of pontoons connected to a central inertial barge. Each pontoon is pivotally, movable by ocean swell or waves relative to the barge. A pump connected between each pontoon and the barge converts the motion of the pontoon into water pressure energy. A power take-off and damping mechanism is then provided for transforming incoming power, oscillating at a low frequency, into a higher frequency oscillating form for use in a generator, turbine, reverse osmosis plant or the like.

It is known to those skilled in the art that the systems described above can be increased in efficiency. This can be achieved by incorporating them with double stage filtration systems, sequential filtration systems, and by using the high pressure brine waste output from the filters to drive pumps or pelton wheels for energy recovery.

Water engines are alternative means known to be suitable for extracting energy from a body of water e.g. UK Patent Application No. 2,138,509 and 2,093,124. In such engines one or more floats are housed within one or more associated water chambers. Input gate valves permit water from the body of water to be admitted to the water chambers and then to be exhausted to a lower level, thereby causing the floats to rise and fall. Power is thereafter harnessed from the floats by means of one or more hydraulic rams that are mechanically connected to the floats within the water chambers. In particular the hydraulic rams use the kinetic energy of the floats to pressurise a hydraulic fluid contained within the hydraulic rams.

Water engines, of various designs, employed to drive a reverse osmosis apparatus are known to those skilled in the art. Particular examples of such systems can be found within Spanish Patent Application Number 2,107,384, European Patent Application No. 059275 and US Patent Numbers 4,698,969, 5,186,822 and 5,4.11,377.

It is an object of aspects of the present invention to provide a desalination device of improved efficiency that employs a water engine in order to provide the required power for reverse osmosis of a liquid.

It is a further object of an aspect of the present invention to provide a desalination device of improved efficiency that employs a water engine that operates by extracting tidal energy.

According to a first aspect of the present invention there is provided a desalination device for desalinating a liquid, the device comprising: a water engine suitable for extracting energy from a body of water, the water engine being of a type comprising a pair of water driven floats arranged for vertical reciprocating movement within respective water chambers, each float being mechanically connected to a hydraulic ram, the hydraulic rams being arranged so as to move in opposite directions such that when a ram is on an extension stroke liquid is drawn into the ram and when a ram is on a compression stroke the liquid is pressurised within the ram; and a reverse osmosis unit connected to a high pressure output of the hydraulic rams, the reverse osmosis unit comprising a first reverse osmosis filter;
characterised in that
the desalination device further comprises an hydraulic motor that is driven by an exhaust liquid from the first reverse osmosis filter and a pump powered by the hydraulic motor such that the pump provides a secondary, pressurised liquid input to the hydraulic rams.

With this arrangement the hydraulic motor can be employed to recover energy from the high pressure water ejected as concentrate from reverse osmosis filter and feed this back to the water engine. As a result there is provided a secondary pressurised liquid input to the hydraulic ram. In addition, since this secondary pressurised liquid input has already passed through the device it comprises a lower salt content and thus provides for an overall increased efficiency of the device.

Preferably the reverse osmosis unit further comprises a second reverse osmosis filter which acts to filter a permeate produced by the first reverse osmosis filter.

Optionally a feedback pipe connects an exhaust of the second reverse osmosis filter so as to provide a third liquid input to the hydraulic rams.

Preferably the feedback pipe comprises a first hydraulic accumulator for storing the exhaust liquid from the second reverse osmosis filter.

Preferably the desalination the device further comprising an input filter suitable for removing particulate debris or suspended solids contained within the body of water.

Preferably the water chambers comprise an input gate valve and an output gate valve.

Most preferably a changing geometry headgear connects the pair of reciprocating water driven floats.

Preferably the changing geometry headgear comprises a pivotally mounted beam and an extendible post associated with each of the water driven float, such that the post adjustably connects to the associated float allowing the position of the float to be adjusted relative to the associated water chamber.

Most preferably the hydraulic rams are connected at one end to the pivotally mounted beam

Optionally the desalination device further comprises a device input valve suitable for controlling the flow of liquid in an hydraulic ram input pipe.

Most preferably the reverse osmosis unit comprises a second hydraulic accumulator for storing the high pressure liquid output from the hydraulic rams before passing the stored liquid through the first reverse osmosis filter.

Preferably, the desalination device further comprises a control valve and a double acting hydraulic ram wherein the control valve is powered by an exhaust liquid from the first reverse osmosis filter so as to operate the double acting hydraulic ram thus providing a means for controlling the input and output gate valves.

Preferably the control valve comprises a three position four port valve.

Preferably the desalination device further comprises an electrical generator and a rechargeable battery, wherein the electrical generator is driven by the hydraulic motor so as to charge the rechargeable battery.

Optionally the desalination device further comprises one or more diagnostics for monitoring the operation of the device.

Preferably the rechargeable battery source provides the required power for the one or more diagnostics.

According to a second aspect of the present invention there is provided a method of desalinating a liquid the method comprising the steps of:
1) Deploying a desalination device as claimed within any of claims 1 to 16 within a body of water;
2) Supplying the liquid for desalination to the hydraulic rams;
3) Extracting the energy associated with the body of water so as to power the water engine;

Preferably the step of deploying the desalination device comprises locating the water engine and the reverse osmosis unit within an enclosed reservoir provided with a means for controllably releasing the enclosed water of the reservoir.

Alternatively the step of deploying the desalination device within the body of water comprises locating the water engine and the reverse osmosis unit within a stream, river or other similar naturally occurring moving body of water.

Most preferably the step of supplying the liquid for desalination comprises redirecting a sample of the body of water to the one or more hydraulic rams.

Preferably the supply of the liquid for desalination comprises the systematic opening and closing of one or more input ports and one or more output ports so as to regulate the flow of the liquid through the hydraulic rams.

Optionally the systematic opening and closing of the one or more input ports and the one or more output ports is controlled by changes in pressure within the hydraulic rams caused by the movement of the floats within the water chambers.

Preferably the extraction of the energy associated with the body of water comprises the systematic opening and closing of one or more input gate valves and one or more output gate valves so as to regulate the flow of the body of water through the water engine.

Embodiments of the invention will now be described, by way of example only, with reference to the accompanying drawings, in which:
- Figure 1: present a schematic representation of a desalination device in accordance with an aspect of the present invention;
- Figure 2: presents a schematic representation of a water engine employed by the desalination device;
- Figure 3: present a circuit diagram of the desalination device of Figure 1; and
- Figure 4: presents an illustration showing the operational time periods for the desalination device of Figure 1.

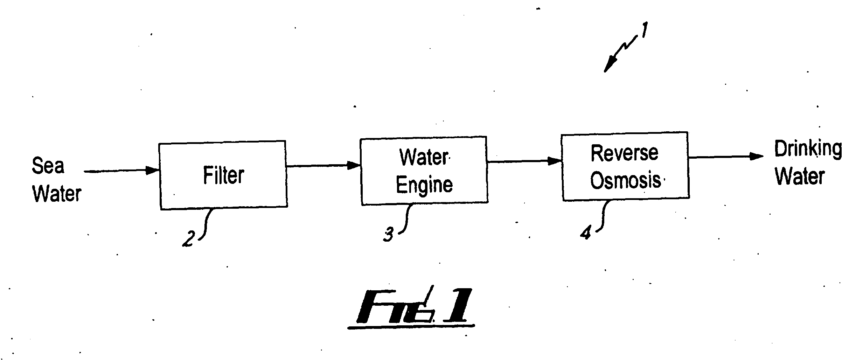

Figure 1 presents a schematic representation of a desalination device 1 in accordance with an aspect of the present invention. The desalination device 1 can be seen to comprise three main components namely, an input filter 2, a water engine 3 and a reverse osmosis unit 4. Generally the device 1 operates by passing sea water through the input filter 2 which removes particulate debris and suspended solids. The water engine 3 then pumps the sea water to a high pressure sufficient for it to pass through the reverse osmosis filter unit 4 thus producing water suitable for human consumption.

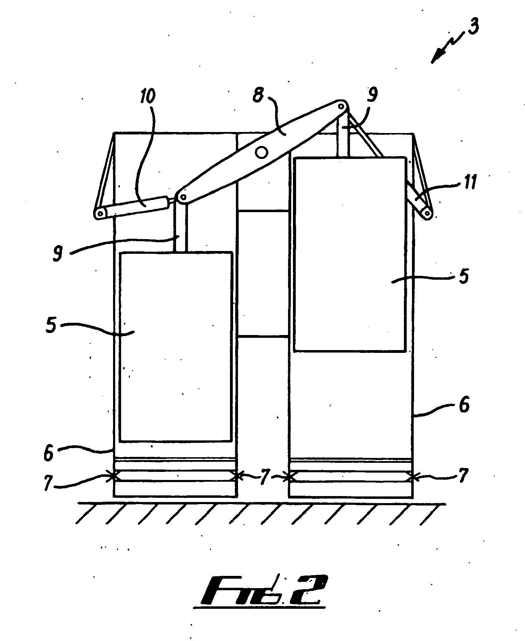

The water engine 3 typically is of a type taught of in UK Patent No. GB 2,138,509, a schematic representation of which is shown in Figure 2. The water engine 3 can be seen to comprise two floats 5 arranged to reciprocate vertically in respective water chambers 6. Water is admitted and expelled from each chamber 6 via gate valves 7. In particular water is drawn from a head of water into the water engine 3 before being allowed to exhaust to a lower level (details of this process are described below). This process causes the floats 5 to rise and fall thus acting to drive a pivotally mounted beam 8.

The water engine 3 is adapted and improved in order to make it suitable for use with a water reservoir energy source. In the first instance the floats 5 are adapted so as to be capable of moving up in response to the rising water levels associated with a flood tide. Similarly, the floats can move down as the mean water level falls as experienced during ebb tides. This is adjustment is realised by mounting the floats 5 on extensible posts 9 using threaded adjusters so as to provide a facility for moving the floats 5 up or down on the posts 9 as the average level of the water changes during an operating period. The adjusters may be driven by hydraulic or electrical motors under the control of a central control unit, in response to changes of the reservoir and external water levels.

In place of a closed circuit hydraulic system previously used to extract power from the water engine 3, two hydraulic rams 10 and 11 have been adapted so as to pump sea water to a high pressure. The hydraulic rams 10 and 11 do not employ hydraulic oil but instead are supplied with sea water at their input. Compression of a hydraulic ram 10 or 11 results in the sea water being compressed to a pressure of around 84 bar (84 x 10⁵ Pa) suitable for input to the reverse osmosis unit 4. Additionally, the supply of water to the hydraulic rams 10 and 11 is filtered by filter 2 so as to remove suspended solids, sand and other contaminants.

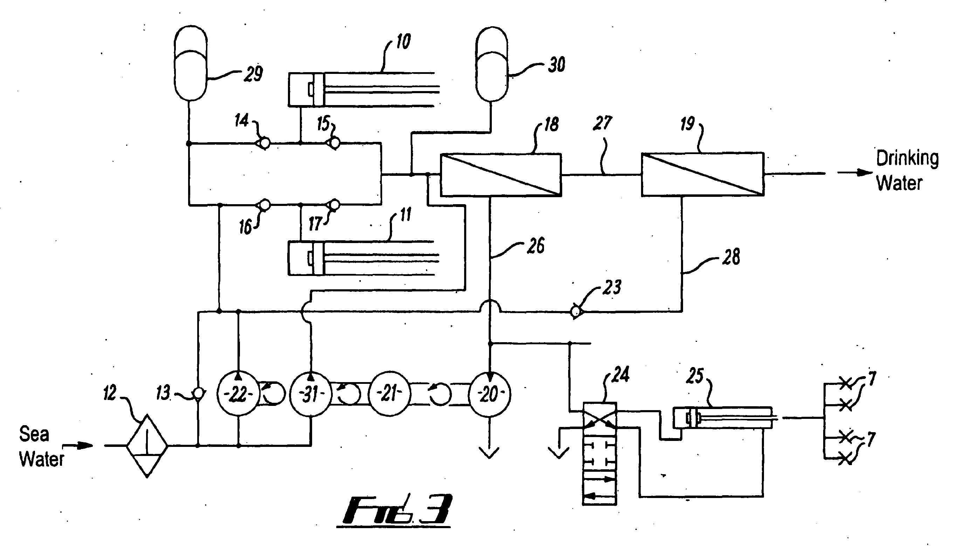

A circuit diagram of a particular embodiment of the desalination device 1 is shown in Figure 3. For the sake of clarity pressure regulation valves, control valves, isolation valves and pressure gauges are not shown throughout the diagram. It will be appreciated that there are many ways of configuring the desalination device 1. However, in this embodiment the device is deployed such that the water engine 3 interacts with a sea water reservoir.

Initially the sea water is drawn through the filter 12 via a low pressure pump 22 or through a first non return valve 13. The hydraulic rams 10 and 11 are then driven by the movement of the floats 5 of the water engine 3 as described in UK Patent No. GB 2,138,509. The hydraulic rams 10 and 11 are arranged so as to move in opposite directions. Thus, when hydraulic ram 10 is on its extension stroke it draws sea water in through a first input non return valve 14 while a corresponding first output non return valve 15 is closed.

Hydraulic ram 11 then forces the fluid in its body out through a second output non return valve 17 while a second input non return valve 16 remains closed. On the opposite stroke of the floats 5 of the water engine 3 hydraulic ram 11 is on its extension stroke drawing sea water in through the second input non return valve 16 while second output non return valve 17 is closed. Hydraulic ram 10, on its compression stroke, forces the fluid in its body out through the first output non return valve 15 while the first input non return valve 14 remains closed.

The output from the hydraulic rams is then fed to a hydraulic accumulator 30 that maintains a steady pressure in the system of around 84 bar (84 x 10⁵ Pa). This high pressure water source then feeds the first reverse osmosis filter 18 that comprises a polyamide membrane. A suitable example is Osmonics 914-SW2(PA). Reverse osmosis filter 18 permits some 25% of the water to pass into to pipe 27 as permeate. The remaining 75% of Brine or more concentrated sea water is ejected out at pipe 26.

The high pressure water in pipe 26 is then fed to a motor 20 and a control valve 24 system. The control valve 24 is a three position four port control valve for a double acting hydraulic ram 25, which serves to drive the water engine gate valves 7, that alternately admit or release water from the water chambers, as described in detail in UK Patent No. GB 2,138,509. The operation of valve 24 can be either electrical, via a central control unit, or mechanical and its operation is triggered by the floats 5 of the water engine 3 reaching the ends or near the ends of their strokes. The valve 24 also allows the water engine 3 to be stopped by positioning the valve 24 in the central isolation position. In this position the gate valves are all open allowing the water engine to operate as a sluice.

The waste water ejected from the hydraulic ram 25 through valve 24 is returned to.the sea away from the inlet to filter 12 so as to avoid the problematic feature of Prior Art systems whereby the salt concentration of the water input to the system can be inadvertently increased.

Hydraulic motor 20 is employed to recover energy from the high pressure water ejected as concentrate from reverse osmosis filter 18. High pressure water in pipe 26 drives motor 20 that in turn drives an electrical generator 21, the low pressure pump 22 and the high pressure pump 31. The waste brine from the motor 20 is again expelled from the device at a point physically separated from the inlet filter 12.

Low pressure pump 22 can then be used to aid the drawing of water in through filter 2 as well as providing a secondary pressurised input to the hydraulic rams 10 and 11 of some 1 bar (1 x 10⁵ Pa). This secondary pressure input is particularly useful in overcoming the water engines lack of force at the end of each stroke when the hydraulic rams 10 and 11 are providing the maximum input suction. Such characteristics have been problematic in systems described in the Prior Art resulting in an overall reduced working efficiency of those devices. Hydraulic reservoir 29 accumulates this low pressure input to provide a constant supply over the cyclical demands of the hydraulic rams.

High pressure pump 31 draws sea water through the input filter 2 and pumps it to some 84 bar (84 x 10⁵ Pa). This high pressure sea water is fed to hydraulic accumulator 30 for input to the first reverse osmosis filter 18.

Generator 21 is used to generate electricity for charging batteries that drive a control system and diagnostics that monitors and controls the operation of the desalination device 1. In times of lower demand for water output the use of a larger generator allows provision of electrical power for a remote area. Conventional control techniques known to those skilled in the art are used for this purpose.

The permeate output of reverse osmosis filter 18'is fed into a second reverse osmosis filter 19 via a pipe 27. Thus the desalination device effectively employs a two pass reverse osmosis system. Reverse osmosis filter 19 comprises a Cellulose Acetate type with an operating pressure of some 22.5 bar (22.5 x 10⁵ Pa). A suitable example is Osmonics 911-PR. The output permeate is then fed by pipe to the required location, for example an on shore water storage facility.

To further increase the system efficiency the rejected concentrate from reverse osmosis filter 19 is fed by pipe 28 via a non return valve 23 to the input of the main hydraulic rams and is stored in a water reservoir 29. This helps to recover some of the lower pressure energy from the input to reverse osmosis filter 19. Optionally a further energy extraction mechanism can be fitted at this point. A secondary advantage of re routing this rejected sea water is that the salt concentration is still much less than that of the original sea water as it has already passed through reverse osmosis filter 18. Therefore the salt concentration in the sea water fed back through the desalination device is reduced.

It should be noted that if there is no pressure in water reservoir 29 and low pressure pump 22 is not operating the suction of the hydraulic rams via the input non return valves 14 and 16 draws sea water in through the first non return valve 13 and filter 2. This results in slower cycling of the water engine as the water engine does not generate as much force at the end of each stroke. However, pressurising the inputs to the hydraulic rams results in faster water engine cycling and improved throughput, thus improving the performance of the water engine as described in UK Patent No. GB 2, 138, 509.

By using a two pass reverse osmosis system the salt rejection required by reverse osmosis filter 18 can be as low as 95%, compared with 99% required for a single pass system. In addition the second reverse osmosis filter 19 can then be, a cheaper and more effective brackish water model.

The desalination device 1 is ideal for use in conjunction with a tidal barrage (not shown) that is capable of capturing an area of tidal water to shore. The tidal barrage typically comprises sluice gates that can be moved between an open and closed position. For a tidal range of typically 5m mean rise and fall the water engine 3 operating from a head of 1.5m would permit operation of the desalination device 1 for some 4 hours out of 6 hours on the ebb of the tide and some 4 hours out of 6 hours on the flood tide.

The energy stored in the hydraulic accumulator 30 is used to allow the gate valves 7 to be operated to restart the water engine, or to perform a sluicing operation between tides. For instance when the water head becomes insufficient sluicing via the desalination device is employed so as to allow the area enclosed by the tidal barrage to be either almost fully emptied (ebb tide) or almost fully filled (flood tide).

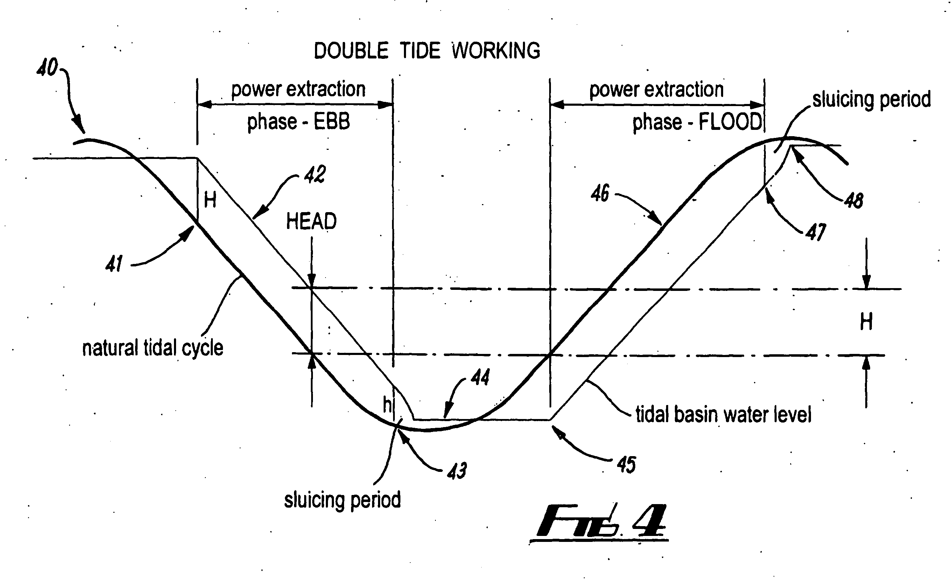

Figure 4 illustrates the operating periods of the system using double tide working over a complete tidal cycle. At the start of the cycle 40 the tide is fully in and the tidal basin water level is almost equal to that of the outside sea. The sluice gates are closed and the water engine is not operating and the gate valves 7 are shut in one direction. After a period of time the sea level outside the basin falls to cause a differential head of water across the tidal barrage and the water engine 3. At 41 the head is sufficient for the water engine 3 to commence efficient operation and therefore the water engine 3 is started by enabling the float controlled operation of the gate valves 7. The operation of the water engine 3 then pumps the sea water as described above.

As the water engine 3 passes water through the water chambers 6 the water in the tidal basin 42 falls at the same rate as the outside sea. At the end of the ebb tide power extraction phase 43 the operating head starts to fall and the water engine 3 is disabled.

To prepare for the next cycle the water engine 3 can be switched to sluicing mode and or additional sluice gates in the tidal barrage opened. Here the larger the sluice gates are made the nearer the tidal basin level will approach that of the sea during sluicing. The ebb tide sluicing stops at low water 44 and the gate valves 7 are closed along with any additional sluice gates.

After a period' of time the sea level outside the tidal barrage has risen to provide the required operating head 45 and the water engine 3 is again started. As the tide rises 46 the basin water level also rises with the water flowing through the operating desalination device 1. Towards the end of the flood tide the operating head starts to fall 47 and the system again switches to sluicing allowing the basin water level to rise until high water is reached 48. At this point the sluice gates are closed and the complete cycle starts again.

In an alternative embodiment the desalination device can be adapted such that it operates on a single tide although such an arrangement would reduce the power output periods in comparison with the double tide embodiment.

Aspects of the present invention describe a desalination device that operates using tidal energy. A significant advantage of such a system is the saving in running costs associated with providing the power needed in the Prior Art systems for pumping the water. Additionally, as there is no need to install an electricity supply or other generation means to provide the power for desalination this can lead to significant cost savings, and the ability to provide water supplies in otherwise impractical conditions.

The desalination device described has the further advantage that it employs simple technology and therefore provides for low maintenance reliable installations. By using a two pass reverse osmosis system the lifetime of the filter elements can also be extended and therefore a lower maintenance more robust reverse osmosis process is produced.

The desalination device is ideal for installation with an in shore sited barrage that allows for easy access and easy transportation of the output water by pipe to a shore based storage facility. The device is also fully scaleable such that a suitably sized system can be installed in an existing location, for example at the mouth of a disused harbour, or in a short barrage across a narrow inlet.

By using the tide as the power source a continual supply of fresh water can be realised, with gaps limited only to the high and low periods of the tide. As a result the fresh water supply is not affected by weather conditions, which might affect other renewable energy sources, or a rainfall based water supply system. Such features, minimise the need for large fresh water storage systems that may not be easily realised on an island location.

Employing the hydraulic rams to directly pump sea water has the added advantage that it avoids the use of hydraulic oil. Therefore, there are obvious advantages to the environment in that the risk of contamination is significantly reduced.

The use of the output of the hydraulic rams allows the desalination device to operate at low heads of water thus making it suitable for double tide working. This provides for a very efficient use of the tidal energy available as it minimises the losses associated with the Prior Art water engines in translating tidal energy into electrical power and back again into mechanical power. By using existing technique for energy recovery in reverse osmosis processing combined with a small electrical generator to power the process control and monitoring equipment the use of the available energy can be optimised.

As the desalination device works on a doubled tide mode there would be little impact on the local environment as the water inside the breakwater would still rise and fall like the tide, albeit slightly delayed in phase.

The desalination device can be used for water purification in a run of river situation by installing the device across a weir or small dam in the river to generate the necessary head for operation. In this installation a different form of reverse osmosis system may be used to more efficiently purify the river water. The run of river provides the energy source to drive the desalination device in this instance.

## Claims

1. A desalination device (1) for desalinating a liquid, the device comprising: a water engine (3) suitable for extracting energy from a body of water, the water engine being of a type comprising a pair of water driven floats (5) arranged for vertical reciprocating movement within respective water chambers (6), each float (5) being mechanically connected to a hydraulic ram (10), the hydraulic rams (10) being arranged so as to move in opposite directions such that when a ram (10) is on an extension stroke liquid is drawn into the ram (10) and when a ram (10) is on a compression stroke the liquid is pressurised within the ram (10) ; and
a reverse osmosis unit (4) connected to a high pressure output of the hydraulic rams (10), the reverse osmosis unit (4) comprising a first reverse osmosis filter (18);
**characterised in that**
the desalination device (1) further comprises an hydraulic motor (20) that is driven by an exhaust liquid from the first reverse osmosis filter (18) and a pump (22) powered by the hydraulic motor (20) such that the pump (22) provides a secondary, pressurised liquid input to the hydraulic rams (10).

2. A desalination device (1) as claimed in Claim 1 wherein the reverse osmosis unit (4) further comprises a second reverse osmosis filter (19) which acts to filter a permeate produced by the first reverse osmosis filter (18).

3. A desalination device (1) as claimed in Claim 2 wherein a feedback pipe (28) connects an exhaust of the second reverse osmosis filter (19) so as to provide a third liquid input to the hydraulic rams (10).

4. A desalination device (1) as claimed in Claim 3 wherein the feedback pipe (28) comprises a first hydraulic accumulator (29) for storing the exhaust liquid from the second reverse osmosis filter (19).

5. A desalination device (1) as claimed in any of the preceding claims wherein the device further comprising an input filter (12) suitable for removing particulate debris or suspended solids contained within the body of water.

6. A desalination device (1) as claimed in any of the preceding claims wherein the water chambers (6) comprise an input gate valve and an output gate valve (7).

7. A desalination device (1) as claimed in any of the preceding claims wherein a changing geometry headgear (8, 9) connects the pair of reciprocating water driven floats (5).

8. A desalination device (1) as claimed in Claim 7 wherein the changing geometry headgear (8, 9) comprises a pivotally mounted beam (8) and an extendible post (9) associated with each of the water driven floats (5), such that the post adjustably connects to the associated float (5) allowing the position of the float (5) to be adjusted relative to the associated water chamber (6).

9. A desalination device (1) as claimed in Claim 8 wherein the hydraulic rams (10) are connected at one end to the pivotally mounted beam (8).

10. A desalination device (1) as claimed in any of the preceding claims wherein the desalination device (1) further comprises a device input valve (13) suitable for controlling the flow of liquid in an hydraulic ram input pipe.

11. A desalination device (1) as claimed in any of the preceding claims wherein the reverse osmosis unit (4) comprises a second hydraulic accumulator (30) for storing the high pressure liquid output from the hydraulic rams (10) before passing the stored liquid through the first reverse osmosis filter (18)

12. A desalination device (1) as claimed in any of claims 6 to 11 wherein the desalination device (1) further comprises a control valve (24) and a double acting hydraulic ram (25) wherein the control valve (24) is powered-by an exhaust liquid from the first reverse osmosis filter (18) so as to operate the double acting hydraulic ram (25) thus providing a means for controlling the input and output gate valves (7).

13. A desalination device (1) as claimed in Claim 12 wherein the control valve (24) comprises a three position four port valve.

14. A desalination device (1) as claimed in any of the preceding claims wherein the desalination device (1) further comprises an electrical generator (21) and a rechargeable battery, wherein the electrical generator (21) is driven by the hydraulic motor (20) so as to charge the rechargeable battery.

15. A desalination device (1) as claimed in any of the preceding claims wherein the desalination device (1) further comprises one or more diagnostics for monitoring the operation of the device.

16. A desalination device (1) as claimed in Claim 15 wherein, the rechargeable battery source provides the required power for the one or more diagnostics.

17. A method of desalinating a liquid the method comprising the steps of:
1) Deploying a desalination device (1) as claimed within any of claims 1 to 16 within a body of water;
2) Supplying the liquid for desalination to the hydraulic rams (10);
3) Extracting the energy associated with the body of water so as to power the water engine (3).

18. A method of desalinating a liquid as claimed in Claim 17 wherein the step of deploying the desalination device (1) comprises locating the water engine (3) and the reverse osmosis unit (4) within an enclosed reservoir provided with a means for controllably releasing the enclosed water of the reservoir.

19. A method of desalinating a liquid as claimed in Claim 17 wherein the step of deploying the desalination device (1) within the body of water comprises locating the water engine (3) and the reverse osmosis unit (4) within a stream, river or other similar naturally occurring moving body of water.

20. A method of desalinating a liquid as claimed in Claim 17 to 19 wherein the step of supplying the liquid for desalination comprises redirecting a sample of the body of water to the one or more hydraulic rams (10).

21. A method of desalinating a liquid as claimed in Claim 17 to 20 wherein the supply of the liquid for desalination comprises the systematic opening, and closing of one or more input ports (14, 16) and one or more output ports (15, 17) so as to regulate the flow of the liquid through the hydraulic rams (10).

22. A method of desalinating a liquid as claimed in Claim 21 wherein the systematic opening and closing of the one or more input ports and the one or more output ports is controlled by changes in pressure within the hydraulic rams (10) caused by the movement of the floats (5) within the water chambers (6).

23. A method of desalinating a liquid as claimed in Claim 17 to 22 wherein the extraction of the, energy associated with the body of water comprises the systematic opening and closing of one or more input gate valves and one or more output gate valves (7) so as to regulate the flow of the body of water through the water engine (3).

## Patentansprüche

1. Eine Entsalzungsanlage (1) zur Entsalzung von Flüssigkeiten, wobei die Anlage folgendes umfasst: einen mit Wasser betriebenen Motor (3), der geeignet ist, Energie aus einem Gewässer zu gewinnen, wobei der mit Wasser betriebene Motor ein Paar wasserbetriebene Schwimmer (5) umfasst, die so angeordnet sind, dass sie eine vertikale Hubbewegung innerhalb entsprechender Wasserkammern (6) ausführen, jeder Schwimmer (5) ist mechanisch mit einem Hydraulikkolben (10) verbunden, die Hydraulikkolben (10) sind so angeordnet, dass sie sich gegenläufig bewegen, so dass während des Ansaugtakts Flüssigkeit in den Kolben (10) gesogen wird, und während des Verdichtungstakts die Flüssigkeit innerhalb des Kolbens (10) unter Druck gesetzt wird; und
eine Umkehrosmoseanlage (4), die mit einem Hochdruckausgang des Hydraulikkolbens (10) verbunden ist, wobei die Umkehrosmoseanlage (4) einen ersten Umkehrosmosefilter(18) beinhaltet;
und **dadurch gekennzeichnet ist, dass**
die Entsalzungsanlage (1) außerdem einen Hydraulikmotor (20) umfasst, der durch die ausströmende Flüssigkeit des ersten Umkehrosmosefilters (18) angetrieben wird, sowie eine vom Hydraulikmotor (20) angetriebene Pumpe (22), so dass die Pumpe (22) dem Hydraulikkolben (10) eine zusätzliche, unter Druck stehende Flüssigkeit zuführt.

2. Eine Entsalzungsanlage (1), wie in Patentanspruch 1 gefordert, wobei die Umkehrosmoseanlage (4) außerdem einen zweiten Umkehrosmosefilter (19) umfasst, der dazu dient, das vom ersten Umkehrosmosefilter (18) erzeugte Permeat zu filtern.

3. Eine Entsalzungsanlage (1), wie in Patentanspruch 2 gefordert, wobei ein Rückführungsrohr (28) mit der Auslassöffnung des zweiten Umkehrosmosefilters (19) verbunden ist und so dem Hydraulikkolben (10) eine dritte Flüssigkeit zuführt.

4. Eine Entsalzungsanlage (1), wie in Patentanspruch 3 gefordert, wobei das Rückführungsrohr (28) einen ersten Hydraulikspeicher (29) umfasst, der die ausgestoßene Flüssigkeit des zweiten Umkehrosmosefilters (19) speichert

5. Eine Entsalzungsanlage (1), wie in allen vorangegangenen Patentansprüchen gefordert, wobei die Anlage außerdem einen Eingangsfilter (12) umfasst, der dazu geeignet ist, im Gewässer enthaltene Ablagerungen oder Schwebstoffe zu entfernen.

6. Eine Entsalzungsanlage (1), wie in allen vorangegangenen Patentansprüchen gefordert, wobei die Wasserkammem (6) ein Eingangsabsperrventil und ein Ausgangsabsperrventil (7) umfassen.

7. Eine Entsalzungsanlage (1), wie in allen vorangegangenen Patentansprüchen gefordert, wobei ein Fördergerüst mit veränderlicher Geometrie (8, 9) die beiden sich auf und ab bewegenden wasserbetriebenen Schwimmer (5) verbindet.

8. Eine Entsalzungsanlage (1), wie in Patentanspruch 7 gefordert, wobei das Fördergerüst mit veränderlicher Geometrie (8, 9) einen drehbar gelagerten Träger (8) und eine ausfahrbare Stange (9) umfasst, die mit jedem der wasserbetriebenen Schwimmer verbunden ist, so dass die Stange jeden Schwimmer (5) verstellbar derart verbindet, dass die Position des Schwimmers (5) relativ zur verbundenen Wasserkammer (6) verstellt werden kann.

9. Eine Entsalzungsanlage (1), wie in Patentanspruch 8 gefordert, wobei die Hydraulikkolben (10) an einem Ende mit dem drehbar gelagerten Träger (8) verbunden sind.

10. Eine Entsalzungsanlage (1), wie in allen vorangegangenen Patentansprüchen gefordert, wobei die Entsalzungsanlage (1) außerdem ein Anlageneingangsventil (13) umfasst, das dazu geeignet ist, den Flüssigkeitsstrom in das Eingangsrohr des Hydraulikkolbens zu steuern.

11. Eine Entsalzungsanlage (1), wie in allen vorangegangenen Patentansprüchen gefordert, wobei die Umkehrosmoseanlage (4) einen zweiten Hydraulikspeicher (30) umfasst, der die ausgestoßene, unter hohem Druck stehende Flüssigkeit von den Hydraulikkolben (10) speichert, bevor sie die gespeicherte Flüssigkeit durch den ersten Umkehrosmosefilter (18) passiert

12. Eine Entsalzungsanlage (1), wie in den Patentansprüchen 6 bis 11 gefordert, wobei die Entsalzungsanlage (1) außerdem ein Steuerventil (24) und einen doppelt wirkenden Hydraulikkolben (25) enthält, wobei das Steuerventil (24) durch die ausgestoßene Flüssigkeit des ersten Umkehrosmosefilters (18) angetrieben wird und so den doppelt wirkenden Hydraulikkolben (25) betreibt und **dadurch** die Steuerung der Eingangs- und Ausgangsabsperrventile (7) ermöglicht.

13. Eine Entsalzungsanlage (1), wie in Patentanspruch 12 gefordert, wobei das Steuerventil (24) ein Dreistellungsventil mit vier Anschlüssen umfasst.

14. Eine Entsalzungsanlage (1), wie in allen vorangegangenen Patentansprüchen gefordert, wobei die Entsalzungsanlage (1) außerdem einen Elektrogenerator (21) und einen Akku umfasst, wobei der Elektrogenerator (21) durch den Hydraulikmotor (20) angetrieben wird und so den Akku lädt.

15. Eine Entsalzungsanlage (1), wie in allen vorangegangenen Patentansprüchen gefordert, wobei die Entsalzungsanlage (1) außerdem einen oder mehrere Diagnose-Programme umfasst, die die Funktion der Anlage überwachen.

16. Eine Entsalzungsanlage (1), wie in Patentanspruch 15 gefordert, wobei der Akku die Energie für eine oder mehrere Diagnose-Programme liefert.

17. Ein Verfahren zur Entsalzung von Flüssigkeiten, wobei das Verfahren die folgenden Schritte umfasst:
1) Aufstellen einer wie in den Patentansprüchen 1 bis 6 geforderten Entsalzungsanlage (1) in einem Gewässer;
2) Zufuhr der zu entsalzenden Flüssigkeit zu den Hydraulikkolben (10);
3) Gewinnung der im Gewässer enthaltenen Energie zum Betreiben des mit Wasser betriebenen Motors (3).

18. Ein Verfahren zur Entsalzung von Flüssigkeiten wie in Patentanspruch 17 gefordert, wobei der Schritt des Aufstellens der Entsalzungsanlage (1) die Positionierung des mit Wasser betriebenen Motors (3) und der Umkehrosmoseanlage (4) innerhalb eines Beckens umfasst, das mit einem Hilfsmittel zum kontrollierten Ausstoß des im Becken eingeschlossenen Wassers ausgestattet ist.

19. Ein Verfahren zur Entsalzung von Flüssigkeiten wie in Patentanspruch 17 gefordert, wobei der Schritt des Aufstellens der Entsalzungsanlage (1) innerhalb des Gewässers die Positionierung des mit Wasser betriebenen Motors (3) und der Umkehrosmoseanlage (4) in einem Strom, Fluss oder einem anderen ähnlichen fließenden natürlichen Gewässer umfasst.

20. Ein Verfahren zur Entsalzung von Flüssigkeiten wie in den Patentansprüchen 17 bis 19 gefordert, wobei der Schritt der Zufuhr der zu entsalzenden Flüssigkeit die Umleitung eines Teils des Gewässers zu einem oder mehreren Hydraulikkolben (10) umfasst.

21. Ein Verfahren zur Entsalzung von Flüssigkeiten wie in den Patentansprüchen 17 bis 20 gefordert, wobei der Schritt der Zufuhr der zu entsalzenden Flüssigkeit das systematische Öffnen und Schließen von einem oder mehreren Eingangsanschlüssen (14, 16) und einem oder mehreren Ausgangsanschlüssen (15, 17) umfasst, so dass der Flüssigkeitsstrom durch die Hydraulikkolben (10) reguliert werden kann.

22. Ein Verfahren zur Entsalzung von Flüssigkeiten wie in Patentanspruch 21 gefordert, wobei das systematische Öffnen und Schließen von einem oder mehreren Eingangsanschlüssen und einem oder mehreren Ausgangsanschlüssen durch die Druckänderung innerhalb der Hydraulikkolben (10) gesteuert wird, die durch die Bewegung der Schwimmer (5) innerhalb der Wasserkammem (6) verursacht wird.

23. Ein Verfahren zur Entsalzung von Flüssigkeiten wie in den Patentansprüchen 17 bis 22 gefordert, wobei die Gewinnung der im Gewässer enthaltenen Energie das systematische Öffnen und Schließen einer oder mehrerer Eingangsabsperrventile und einer oder mehrerer Ausgangsabsperrventile (7) umfasst, so dass der Fluss des Gewässers durch den mit Wasser betriebenen Motor (3) reguliert werden kann.

## Revendications

1. Dispositif de dessalement (1) pour dessaler un liquide, ledit dispositif comprenant : un moteur à eau (3) convenant à l'extraction d'énergie d'une masse d'eau, ledit moteur à eau étant d'un type comprenant une paire de flotteurs entraînés par l'eau (5) agencés pour effectuer un mouvement alternatif vertical à l'intérieur de chambres d'eau respectives (6), chaque flotteur (5) étant mécaniquement relié à un vérin hydraulique (10), les vérins hydrauliques (10) étant agencés de manière à se déplacer dans des directions opposées de telle sorte que lorsqu'un vérin (10) est dans sa course d'extension, du liquide est aspiré dans ledit vérin (10), et lorsqu'un vérin (10) est dans sa course de compression, le liquide est pressurisé dans le vérin (10) ; et
une unité d'osmose inverse (4) reliée à une sortie sous haute pression des vérins hydrauliques (10), ladite unité d'osmose inverse (4) comprenant un premier filtre d'osmose inverse (18) ;
**caractérisé en ce que** :
le dispositif de dessalement (1) comprend en outre un moteur hydraulique (20) entraîné par un liquide d'évacuation provenant du premier filtre d'osmose inverse (18) et une pompe (22) entraînée par le moteur hydraulique (20) de telle sorte que ladite pompe (22) fournit une entrée de liquide pressurisé secondaire aux vérins hydrauliques (10).

2. Dispositif de dessalement (1) selon la revendication 1 dans lequel l'unité d'osmose inverse (4) comprend en outre un second filtre d'osmose inverse (19) qui assure a filtration d'un perméat produit par le premier filtre d'osmose inverse (18).

3. Dispositif de dessalement (1) selon la revendication 2 dans lequel un tuyau d'amenée (28) relie une évacuation du second filtre d'osmose inverse (19) de manière à fournir une troisième entrée de liquide aux vérins hydrauliques (10).

4. Dispositif de dessalement (1) selon la revendication 3 dans lequel le un tuyau d'amenée (28) comprend un accumulateur hydraulique (29) pour stocker le liquide d'évacuation du second filtre d'osmose inverse (19).

5. Dispositif de dessalement (1) selon l'une quelconque des revendications précédentes, ledit dispositif comprenant en outre un filtre d'entrée (12) qui convient à l'élimination de débris particulaires ou de matières en suspension présents dans la masse d'eau.

6. Dispositif de dessalement (1) selon l'une quelconque des revendications précédentes dans lequel les chambres d'eau (6) comprennent un robinet vanne d'entrée et un robinet vanne de sortie (7).

7. Dispositif de dessalement (1) selon l'une quelconque des revendications précédentes dans lequel un mécanisme de tête à géométrie variable (8, 9) relie la paire de flotteurs à mouvement alternatif entraînés par l'eau (5).

8. Dispositif de dessalement (1) selon la revendication 7 dans lequel le mécanisme de tête à géométrie variable (8, 9) comprend une poutre montée de manière pivotante (8) et un montant extensible (9) associé à chacun des flotteurs entraînés par l'eau (5), de telle sorte que le montant est relié de manière ajustable au flotteur associé (5) ce qui permet d'ajuster la position du flotteur (5) par rapport à la chambre d'eau associée (6).

9. Dispositif de dessalement (1) selon la revendication 8 dans lequel les vérins hydrauliques (10) sont reliés à une extrémité à la poutre montée de manière pivotante (8).

10. Dispositif de dessalement (1) selon l'une quelconque des revendications précédentes, ledit dispositif de dessalement (1) comprenant en outre une vanne d'entrée dispositif (13) qui convient pour réguler le débit de liquide dans un tuyau d'entrée de vérin hydraulique

11. Dispositif de dessalement (1) selon l'une quelconque des revendications précédentes dans lequel l'unité d'osmose inverse (4) comprend un second accumulateur hydraulique (30) pour stocker le liquide sous haute pression fournit par les vérins hydrauliques (10) avant de faire passer le liquide stocké à travers le premier filtre d'osmose inverse (18).

12. Dispositif de dessalement (1) selon l'une quelconque des revendications 6 à 11, ledit dispositif de dessalement (1) comprenant en outre une vanne de commande (24) et un vérin hydraulique à double effet (25), ladite vanne de commande (24) étant commandée par un liquide d'évacuation provenant du premier filtre d'osmose inverse (18) de manière à actionner le vérin hydraulique à double effet (25) ce qui constitue un moyen pour commander les robinets vannes d'entrée et de sortie (7).

13. Dispositif de dessalement (1) selon la revendication 12 dans lequel la vanne de commande (24) est constituée d'une vanne à quatre orifices et trois positions.

14. Dispositif de dessalement (1) selon l'une quelconque des revendications précédentes, ledit dispositif de dessalement (1) comprenant en outre un groupe électrogène (21) et une batterie rechargeable, ledit groupe électrogène (21) étant entraîné par le moteur hydraulique (20) de manière à charger la batterie rechargeable.

15. Dispositif de dessalement (1) selon l'une quelconque des revendications précédentes, ledit dispositif de dessalement (1) comprenant en outre un ou plusieurs diagnostics permettant de surveiller le fonctionnement du dispositif.

16. Dispositif de dessalement (1) selon la revendication 15 dans lequel la source de batterie rechargeable fournit l'alimentation requise pour le ou les diagnostics.

17. Procédé de dessalement d'un liquide, ledit procédé comprenant les étapes consistant à :
1) Déployer un dispositif de dessalement (1), selon l'une quelconque des revendications 1 à 6, dans une masse d'eau ;
2) Fournir le liquide pour le dessalement aux vérins hydrauliques (10) ;
3) Extraire l'énergie associée à la masse d'eau de manière à entraîner le moteur à eau (3).

18. Procédé de dessalement d'un liquide selon la revendication 17 dans lequel l'étape consistant à déployer le dispositif de dessalement (1) comprend le positionnement du moteur à eau (3) et de l'unité d'osmose inverse (4) dans un réservoir fermé comportant un moyen de libérer de manière contrôlée l'eau retenue dans le réservoir.

19. Procédé de dessalement d'un liquide selon la revendication 17 dans lequel l'étape consistant à déployer le dispositif de dessalement (1) dans la masse d'eau comprend le positionnement du moteur à eau (3) et de l'unité d'osmose inverse (4) dans un ruisseau, une rivière ou toute autre masse d'eau courante naturelle similaire.

20. Procédé de dessalement d'un liquide selon les revendications 17 à 19, dans lequel l'étape consistant à fournir le liquide pour le dessalement comprend la réorientation d'un échantillon de la masse d'eau vers un ou plusieurs vérins hydrauliques (10).

21. Procédé de dessalement d'un liquide selon les revendications 17 à 20 dans lequel la fourniture du liquide pour le dessalement comprend l'ouverture et la fermeture systématiques d'un ou de plusieurs orifices d'entrée (14, 16) et d'un ou de plusieurs orifices de sortie (15, 17) de manière à réguler le débit de liquide à travers les vérins hydrauliques (10).

22. Procédé de dessalement d'un liquide selon la revendication 21 dans lequel l'ouverture et la fermeture systématiques d'un ou de plusieurs orifices d'entrée et d'un ou de plusieurs orifice de sortie sont contrôlées par des changements de pression à l'intérieur des vérins hydrauliques (10) causés par le mouvement des flotteurs (5) dans les chambres d'eau (6).

23. Procédé de dessalement d'un liquide selon les revendications 17 à 22 dans lequel l'extraction de l'énergie associée à la masse d'eau comprend l'ouverture et la fermeture systématiques d'un ou de plusieurs robinets vannes d'entrée et d'un ou de plusieurs robinets vannes de sortie (7) de manière à réguler le débit de la masse d'eau dans le moteur à eau (3).
